(19) Europäisches Patentamt

European Patent Office

Office européen des brevets

(11) Veröffentlichungsnummer: **0 351 005**

**A2**

(12) **EUROPÄISCHE PATENTANMELDUNG**

(21) Anmeldenummer: **89201798.9**

(22) Anmeldetag: **07.07.89**

(51) Int. Cl.⁴: **H04N 1/41**

(30) Priorität: **13.07.88 DE 3823674**

(43) Veröffentlichungstag der Anmeldung:
**17.01.90 Patentblatt 90/03**

(84) Benannte Vertragsstaaten:
**DE FR GB**

(71) Anmelder: **Philips Patentverwaltung GmbH**
**Wendenstrasse 35 Postfach 10 51 49**
**D-2000 Hamburg 1(DE)**

㊷ **DE**

Anmelder: **N.V. Philips' Gloeilampenfabrieken**
**Groenewoudseweg 1**
**NL-5621 BA Eindhoven(NL)**

㊷ **FR GB**

(72) Erfinder: **Renelt, Gerhard, Dr.**
**Wiebischenkamp 41**
**D-2000 Hamburg 54(DE)**
Erfinder: **Schayes, Raymond Georges**
**Gustave**
**194 Rue Gaty de Gamond**
**B-1180 Bruxelles(BE)**

(74) Vertreter: **Poddig, Dieter, Dipl.-Ing. et al**
**Philips Patentverwaltung GmbH**
**Wendenstrasse 35 Postfach 10 51 49**
**D-2000 Hamburg 1(DE)**

(54) Verfahren zum Übertragen von Bildern und Anordnung zur Durchführung des Verfahrens.

㊼ Es ist bei der Übertragung von Faksimile-Bildern bekannt, die durch nur eine Binärstelle je Bildpunkt dargestellten Schwarz-Weiß-Daten mittels einer Lauflängen-Codierung zu übertragen. Für die Übertragung von Bildern, bei denen die einzelnen Bildpunkte durch Binärwörter mit mehreren Binärstellen dargestellt sind, werden nun die einzelnen Binärstellen aller Binärwörter jeweils einer Bildzeile nacheinander einer Lauflängen-Codierung unterworfen und übertragen. Bei Verwendung eines hierarchischen Codes für die Darstellung der Abtastwerte ist gleichzeitig eine Kompatibilität zu bisherigen Faksimile-Empfängern gegeben, die dann nur die höchste Binärstelle verarbeiten. Es werden außerdem Maßnahmen zur Vorverarbeitung der Abtastwerte angegeben, um eine geglättete Folge zu erhalten, die effektiver mittels Lauflängen-Codierung übertragen werden kann.

Fig.1

## Verfahren zum Übertragen von Bildern und Anordnung zur Durchführung dieses Verfahrens

Die Erfindung betrifft ein Verfahren zum Übertragen von Bildern, die in aufeinanderfolgenden Bildzeilen bildpunktweise abgetastet werden, wobei die Abtastwerte quantisiert und als Binärwörter dargestellt und diese mittels eines Lauflängen-Codes in Codewörter umgesetzt werden, sowie Anordnungen zur Durchführung dieses Verfahrens.

Ein derartiges Verfahren ist bei der Übertragung von Faksimilebildern beispielsweise aus der DE-PS 23 61 234 bekannt. Es wird also nicht der Schwarz/Weiß-Wert der abgetasteten Bildpunkte selbst, sondern die Anzahlen bzw. Lauflängen der in der abgetasteten Zeile jeweils aufeinanderfolgenden weißen Bildpunkte und aufeinanderfolgenden schwarzen Bildpunkte übertragen. Bereits bei der Übertragung mittels derartiger Lauflängencodierung Zeile für Zeile, d.h. mittels eindimensionaler Lauflängen-Codierung, wird gegenüber der Anzahl der abgetasteten Bildpunkte eine Datenreduktion im Mittel um den Faktor 10 erreicht. Die bekannten Verfahren gehen jedoch von einer Schwarz/Weiß-Darstellung der zeilenweise abgetasteten Bildpunkte aus.

Aufgabe der Erfindung ist es, auch bei der Übertragung von Bildern, die eine Mehrzahl von Graustufen und/oder Farben aufweisen, ein Verfahren der eingangs genannten Art anzugeben, mit dem eine entsprechende einfache und redundanzvermindernde Codierung möglich ist.

Diese Aufgabe wird erfindungsgemäß dadurch gelöst, daß zur Übertragung von Bildern, deren Abtastwerte als Binärwörter mit mehreren Binärstellen dargestellt werden, die Bitwerte jeweils gleichwertiger Binärstellen einer Gruppe von Abtastwerten getrennt mittels eines Lauflängen-Codes umgesetzt und übertragen werden, so daß für jede Gruppe eine der Stellenanzahl der Binärwörter gleiche Anzahl codierter Lauflängenfolgen entsteht, die decodiert die Binärstellen der Binärwörter aller Abtastwerte einer Gruppe ergeben. Eine Gruppe Abtastwerte kann einen Teil oder eine ganze Bildzeile umfassen, oder Teile einer Anzahl benachbarter Bildzeilen.

Gemäß der Erfindung wird das bekannte Verfahren der Lauflängen-Codierung also für jede Binärstelle der Binärwörter einer Gruppe, z.B. einer Bildzeile angewendet. Es können also die bekannten Schaltungen und Anordnungen im wesentlichen weiter eingesetzt werden. Da bei vielen Bildern benachbarte Bildpunkte zumindest in einzelnen Bereichen sehr ähnlich sind, unterscheiden sich bei benachbarten Abtastwerten nur wenige Binärstellen der entsprechenden Binärwörter, so daß sich große Lauflängen für die meisten Binärstellen ergeben, was zu einer wirksamen Redundanzverminderung und damit zu einer wirksamen Datenreduktion bei der Übertragung führt. Dies wirkt sich noch stärker aus, wenn nach einer Ausgestaltung der Erfindung die Abtastwerte als Binärwörter eines mindestens teilweise hierarchischen Binärcodes dargestellt werden, bei dem das höchstwertige Bit angibt, ob der Abtastwert im oberen oder im unteren Bereich der Werteskala liegt. Hierbei ergibt sich noch der besondere Vorteil, daß neben einer hohen Datenkompression auch die volle Kompatibilität zu nur schwarz/weiß-codierten Bildern erhalten wird. Es ist also möglich, daß ein Sender für die Übertragung von Grauton- oder Farbbildern auch Empfänger ansteuert, die wie bisher nur Schwarz/Weiß-Bilder ausdrucken können. Wird z.B. ein Grautonbild gleichzeitig an mehrere Empfänger übertragen, so kann ein entsprechend aufgebauter Empfänger das exakte Grautonbild wiedergeben, während ein anderer Empfänger, der ausschließlich für Schwarz/Weiß-Wiedergabe ausgerüstet ist, lediglich die höchstwertigen Bits verarbeitet und alle folgenden Binärstellen ignoriert. Entsprechend gilt dies auch für Farbbilder. Bei der Übertragung zwischen nur zwei Geräten kann der Empfänger dem Sender beim Aufbau der Verbindung die begrenzte Wiedergabemöglichkeit mitteilen, so daß der Benutzer nur die entsprechenden Binärstellen codieren und/oder übertragen muß. Damit kann Übertragungszeit eingespart werden.

Weitere Ausgestaltungen des erfindungsgemäßen Verfahrens sind in den weiteren Unteransprüchen gekennzeichnet.

Eine Anordnung zur Durchführung des erfindungsgemäßen Verfahrens mit einem senderseitigen Codierer zum Umsetzen der Anzahl Bits gleichen Werts in Binärwörtern aufeinanderfolgender Abtastwerte in Codewörter gemäß einem Lauflängen-Code, zum bitseriellen Übertragen der Codewörter zum Empfänger und einem empfängerseitigen Decodierer zum Decodieren der empfangenen Codewörter und zum Erzeugen von Binärwörtern entsprechend einem wiederzugebenden Bild ist erfindungsgemäß dadurch gekennzeichnet, daß senderseitig ein Senderspeicher zur aufeinanderfolgenden Aufnahme der aus den Abtastwerten erzeugten Binärwörter wenigstens einer Gruppe von Abtastwerten, eine Sender-Steueranordnung zum aufeinanderfolgenden Auslesen wenigstens einer Binärstelle aller Binärwörter einer Gruppe und zum Zuführen der Bitwerte der Binärstellen zum Kodierer vorgesehen ist und daß empfangsseitig ein Empfangsspeicher und eine Empfänger-Steueranordnung vorgesehen sind, wobei die Empfänger-Steueranordnung die vom Decodierer gelieferten Bitfolgen in den Empfangsspeicher an den entsprechenden Bitstellen des

2

Empfangsspeichers einschreibt und nach Empfang aller übertragener Information einer Gruppe nacheinander die jeweils zu einem Binärwort gehörenden Bitstellen ausliest. Da senderseitig bei der Abtastung die einzelnen Binärwörter bitparallel anfallen, kann die Codierung und Übertragung der einzelnen Bitstellen erst beginnen, wenn eine Gruppe, z.B eine Zeile vollständig abgetastet worden ist. Zumindest gilt dies für die zweiten und folgenden Bitstellen. Es muß also sowohl senderseitig als auch empfangsseitig je ein Pufferspeicher vorhanden sein, der in der angegebenen Weise senderseitig die Bitwörter parallel aufnimmt und die einzelnen Stellen seriell abgibt und empfangsseitig den umgekehrten Vorgang durchführt. Dabei ist also gegenüber herkömmlichen Geräten außer einer senderseitigen feineren Auflösung der Abtastung und einer empfangsseitigen entsprechenden Ausgabeanordnung nur jeweils der Speicher erforderlich, während der Codierer und der Decodierer im wesentlichen wie bisher üblich aufgebaut sein kann.

Eine andere Anordnung der gleichen Gattung zur Durchführung des erfindungsgemäßen Verfahrens ist dadurch gekennzeichnet, daß senderseitig der Codierer die aus den Abtastwerten erzeugten Binärwörter je Binärstelle parallel in je eine Folge von Codewörtern umsetzt und in einem Sendespeicher einschreibt, daß eine Sender-Steueranordnung vorgesehen ist, die aus dem Senderspeicher nacheinander jeweils eine Folge von Codewörtern einer Gruppe von Abtastwerten ausliest und zum Empfänger überträgt, daß empfangsseitig ein Empfangsspeicher und eine Empfänger-Steuerung vorgesehen sind, wobei die Empfänger-Steuerung die empfangenen Folgen von Codewörtern einer Gruppe nacheinander im Empfangsspeicher speichert und parallel ausliest und dem Decodierer zuführt, der die Bitwerte der einzelnen Bitstellen der Binärwörter einer Gruppe parallel erzeugt. Diese Ausführung ist günstig, wenn eine Übertragungsstrecke mit mehreren parallelen Kanälen, die gegebenenfalls auch zeitverschachtelt sein können, zur Verfügung steht.

Ausführungsbeispiele der Erfindung werden nachstehend anhand der Zeichnung näher erläutert. Es zeigen:

Fig. 1 ein Beispiel einer abgetasteten Zeile sowie der den Abtastwerten zugeordneten Codewörter und den Lauflängen der einzelnen Bitstellen,

Fig. 2 verschiedene linear ansteigende und abfallende Grauwerte innerhalb einer Zeile,

Fig. 3 ein schematisches Blockschaltbild einer Anordnung zur Codierung, Übertragung und Decodierung von Bildsignalen.

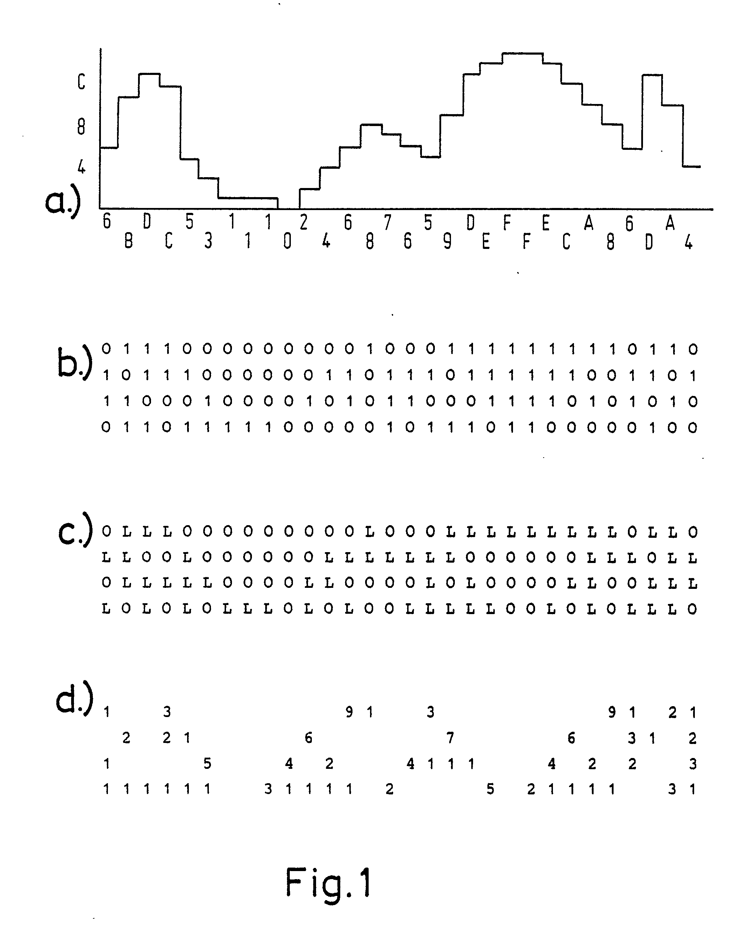

In Fig. 1a ist beispielsweise der Verlauf der Grauwerte über eine Bildzeile eines Grautonbildes angegeben. Die Grauwerte selbst sind darunter in hexadezimaler Darstellung angegeben.

Eine binäre Darstellung dieser Werte durch einen hierarchischen Code ergibt sich bereits, wenn diese hexadezimalen Werte als vierstellige Dualzahlen dargestellt werden, wie dies in Fig. 1b dargestellt ist, wo die Werte der aufeinanderfolgenden Binärstellen der Binärwörter untereinander aufgetragen sind. Eine günstigere Darstellung ergibt sich jedoch, wenn statt dessen ein hierarchischer Code verwendet wird, der bei stetiger Änderung der aufeinanderfolgenden Abtastwerte sich jeweils immer nur in einer Binärstelle ändert, wie dies in Fig. 1c dargestellt ist. Ein Beispiel eines solchen Codes ist in der nachstehen Tabelle 1 angegeben, die die Zuordnung der hexadezimalen Werte zu vierstelligen Binärwörtern zeigt.

Tabelle 1

| 0: OOOO | 4: OLLO | 8: LLOO | c: LOLO |
| 1: OOOL | 5: OLLL | 9: LLOL | d: LOLL |
| 2: OOLL | 6: OLOL | a: LLLL | e: LOOL |
| 3: OOLO | 7: OLOO | b: LLLO | f: LOOO |

Aus solch einem Code mit n Binärstellen kann ein Code mit n + 1 Binärstellen gebildet werden, indem den n Binärstellen eine führende Binärstelle vorgestellt wird und indem die n-stelligen Codewörter der Tabelle 1 für den Teil der erweiterten Tabelle, in welchem die vorgestellte Binärstelle den anderen binären Wert hat, noch einmal in umgekehrter Reihenfolge wiederholt werden. Umgekehrt kann ein entsprechender Code mit weniger Binärstellen erhalten werden, indem nur die Teile der Tabelle 1 verwendet werden, in denen die wegzulassenden Binärstellen konstant sind.

Nach der Abtastung und Umsetzung der Abtastwerte der Bildpunkte einer Bildzeile ergibt sich also eine Matrix aus einer Anzahl Spalten gleich der Anzahl Bildpunkte pro Bildzeile und einer Anzahl Zeilen gleich der Anzahl Binärstellen der Binärwörter aus Binärelementen, wie dies in Fig. 1b oder 1c dargestellt ist. Jede dieser Matrixzeilen wird nun für sich einer Datenreduktion unterworfen, indem sie durch einen Lauflängen-Code dargestellt wird.

Der Vorteil der Verwendung eines gemäß Tabelle 1 gebildeten Codes zur Darstellung der verschiede-

3

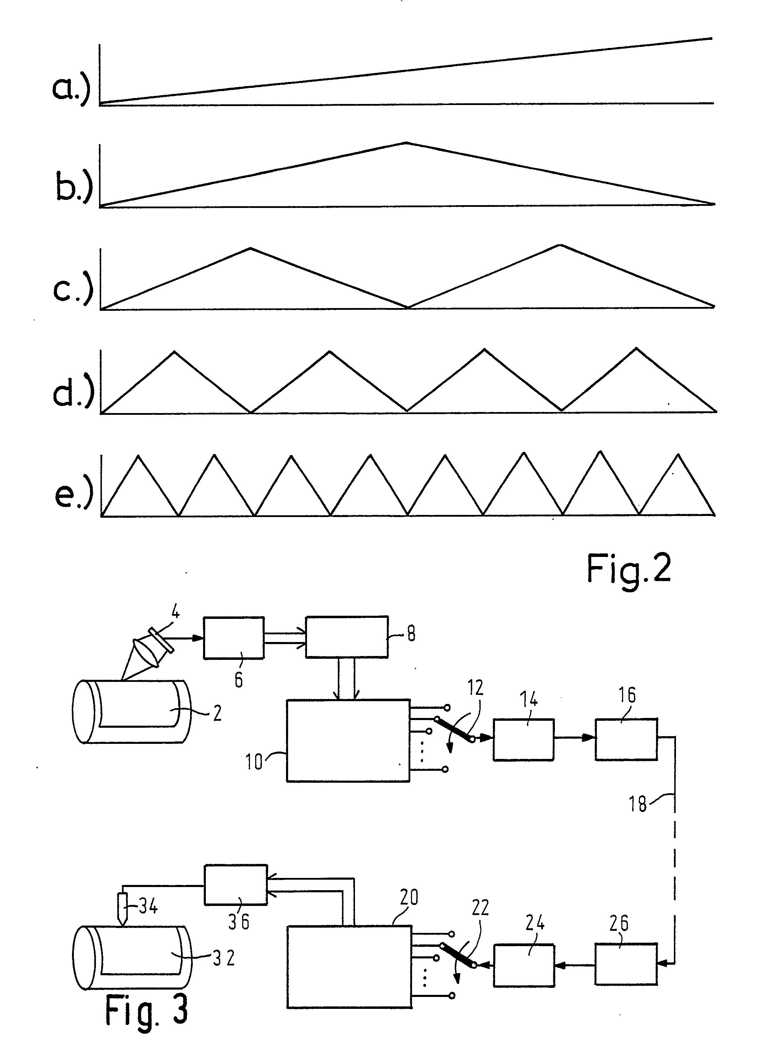

nen Abtastwerte liegt darin, daß damit unter Einsatz geeigneter Lauflängen-Codes eine besonders gute Datenkompression ermöglicht wird. Für linear ansteigende und abfallende Grauwertverteilungen innerhalb einer Bildzeile, wie diese in den Fig. 3a bis 3e dargestellt sind, werden unter Verwendung der üblichen Lauflängen-Codes wie der modifizierte Huffman-Code (MHC) oder der aus der DE-OS 26 51 902 bekannte einfach decodierbare Lauflängencode (EDC) ohne Berücksichtigung eventueller Steuerzeichen die in Tabelle 2 angegebenen Datenreduktionsfaktoren erhalten.

Tabelle 2

|  | MHC | EDC |
|---|---|---|
| Fig. 3a) | 19,98 | 27,32 |
| Fig. 3b) | 11,78 | 17,11 |
| Fig. 3c) | 8,07 | 10,33 |
| Fig. 3d) | 5,01 | 6,18 |
| Fig. 3e) | 3,26 | 3,88 |

Diese günstigen Werte werden erreicht, wenn alle Matrixzeilen jeweils mit dem gleichen Lauflängen-Code, der jedoch nur für die ersten Matrixzeilen optimal angepaßt ist, codiert werden. Eine weitere Verbesserung läßt sich erzielen, wenn die verschiedenen Matrixzeilen mit verschiedenen Lauflängen-Codes codiert und decodiert werden. Besonders geeignet dafür sind Codeklassen, bei denen durch Veränderung eines Parameters eine Anpassung an die jeweiligen Erfordernisse möglich ist, ohne daß der Aufwand für Codierung und Decodierung dabei zu sehr ansteigt. Ein Beispiel dafür sind die Varianten des EDC, bei denen als Parameter der Längenzuwachs $l$-$l_0$ der Nachsilbe dient.

Bei der Übertragung werden die codierten Lauflängen der einzelnen Matrixzeilen nacheinander und beginnend mit der höchstwertigen Matrixzeile übersendet. Beim Verbindungsaufbau kann die Anzahl der Matrixzeilen je Bildzeile (maximale Binärstellenanzahl zur Abtastwertdarstellung) festgelegt werden. Auf der Empfängerseite ergibt sich nach der Decodierung der Lauflängen aus der festgelegten Anzahl von Bildpunkten je Zeile wieder eindeutig die Aufteilung in Matrixzeilen und Bildzeilen, soweit nicht mit Übertragungsfehlern gerechnet werden muß. Vielfach lassen sich solche Fehler jedoch nicht ausschließen. Um ihre Auswirkungen zu begrenzen, werden in diesen Fällen in an sich bekannter Weise codierte Zeilenendezeichen verwendet, die am Ende jeder Matrixzeile oder zumindest am Ende jeder Bildzeile hinzugefügt werden.

Diesen Zeilenendezeichen lassen sich einige Kennungs-Bits hinzufügen, welche Zusatzinformation für die betreffende Zeile enthalten. Insbesondere ist damit eine Angabe der Wertigkeit der betreffenden Matrixzeile möglich. Es ist jedoch auch möglich, daß nur die Bildzeile, zu der die Matrixzeile gehört, durch eine Bildzeilennummer (z.B. mod 4) gekennzeichnet wird, und die Wertigkeit folgt aus der Abfolge der aufeinanderfolgenden Matrixzeilen. Weiter läßt sich insbesondere bei unterschiedlicher Lauflängen-Codierung der verschiedenen Matrixzeilen die Art der betreffenden Codierung durch entsprechende Kennungs-Bits angeben. Im Falle der Codierung von Farbbildern werden zur Farbkennzeichnung überdies entsprechende Kennungs-Bits hinzugefügt. Diese Zusatzinformation wird vorzugsweise unmittelbar nach dem Zeilenendezeichen oder unmittelbar vor ihm plaziert, und es wird die Bedeutung der entsprechenden Binärstellen spätestens beim Verbindungsaufbau festgelegt. Letzteres gilt auch, wenn bei sicherer Übertragung auf die Zeilenendezeichen verzichtet werden kann. Die betreffenden Kennungs-Bits werden dann zwischen dem Zeilenende und dem Anfang der nächsten Zeile eingefügt.

Als Beispiel sei für eine Grauton-Codierung folgendes Kennungsfeld aus fünf Binärstellen betrachtet:
$K_1 K_2 K_3 K_4 K_5$
Dabei gibt $K_1 K_2$ die Zeilennummer (Wertigkeit) der betreffenden Matrixzeile an, während $K_3 K_4$ die Nummer der übergeordneten Bildzeile mod 4 bezeichnet und das Bit $K_5$ angibt, ob die für die betreffende Matrixzeile als normal vereinbarte Lauflängen-Codierung oder eine andere Variante angewendet wurde. Eine solche Variante kann beispielsweise für eine niedrigwertige Matrixzeile bei sehr schnell veränderlichem Bildverlauf auch einmal eine uncodierte Übertragung einer solchen Matrixzeile sein. Die Länge des Kennungsfeldes wird meist konstant gewählt werden, sie kann aber auch in Abhängigkeit vom Inhalt eines Teilfeldes festgelegt werden. Im obigen Beispiel könnte z.B. festgelegt sein, daß die Bildzeilennummer $K_3 K_4$ nur jeweils in der ersten Matrixzeile erscheinen soll.

Bei der bisher beschriebenen Codierung wurde zunächst von Grautonbildern ausgegangen. Sie ist jedoch auf jedes quantifizierbare Bild und insbesondere auch auf Farbbilder anwendbar. Hierzu wird das Farbbild in bekannter Weise in Farbkomponenten zerlegt und die quantifizierte Amplitude jeder Farbkomponente in der angegebenen Weise codiert. Durch eine entsprechende Kennung im Kennungsfeld werden die codierten Zeilen entsprechend gekennzeichnet. Von besonderem Vorteil besonders auch in bezug auf die Kompatibilität zu einer Schwarz/Weiß- und einer Grauwert-Wiedergabe ist jedoch eine Zerlegung des Farbsignals in ebenfalls bekannter Weise in eine Luminanz- und in Chrominanzkomponenten. Auch diese Komponenten lassen sich nach einer Quantisierung mit dem angegebenen Verfahren codieren. Gegebenenfalls kann dabei auch der Informationsinhalt und Darstellungsaufwand der Chrominanzkomponenten durch weniger Matrixzeilen (weniger Quantisierungsstufen) und/oder durch eine geringere räumliche Auflösung (geringere Anzahl von Bildpunkten/Zeile z.B. um den Faktor 2 oder 4 mit entsprechend verkürzter Codierung und/oder eine Bestimmung und Abspeicherung der Chrominanzkomponenten nur für jede r-te Bildzeile) herabgesetzt werden, so daß der Darstellungsaufwand gegenüber der Grauton-Codierung nur mäßig ansteigt.

Bei der Darstellung der Abtastwerte des abgetasteten Bildes durch mehrstellige Binärwörter können jedoch sehr viel leichter als bei der reinen Schwarz/Weiß-Quantisierung ungewollte Schwankungen im quantisierten Ausgangssignal auftreten. Dadurch entstehen dann unterschiedliche Binärwörter für aufeinanderfolgende Bildpunkte, was zu kurzen Lauflängen in zumindest einigen Bitstellen führen kann. Dadurch entsteht weiter eine geringe Datenreduktion durch die Lauflängen-Codierung und somit eine große Übertragungszeit. Derartige kleine Schwankungen können durch eine ganze Reihe von Einflüssen entstehen, wie Staubkörnern oder lokalen Schwankungen in den Eigenschaften des Trägers des abgetasteten Bildes und der Druckerschwärze und der Feinstruktur des Drucks sowie im Falle einer bildpunktparallelen Abtastung auch in Empfindlichkeitsunterschieden der einzelnen Fotozellen.

Eine erste Möglichkeit, derartige irrelevante Schwankungen im Abtastsignal von aufeinanderfolgenden Bildpunkten zu reduzieren, ist dadurch möglich, daß die Fläche des abgetasteten Bildpunktes vergrößert wird, d.h. durch eine leichte Defokussierung, so daß zumindest in den Randzonen eine Überlappung mit der Abtastung der Nachbarpunkte eintritt. Durch die damit bewirkte Integration werden Schwankungen in der Feinstruktur des abgetasteten Bildes ausgeglichen.

Eine andere Möglichkeit zum Ausgleich von zufälligen Schwankungen des Abtastsignals, die allein oder zusätzlich zu der vorgenannten Vergrößerung des abgetasteten Bildpunktes durchgeführt werden kann, besteht darin, daß die quantisierten Abtastwerte aufeinanderfolgender Bildpunkte miteinander verglichen werden. Solange die Unterschiede dabei unter einem vorgegebenen Schwellwert bleiben, werden diese Abtastwerte alle auf einem konstanten Wert, z.B. dem Mittelwert gehalten. Liefert der Quantisierer zunächst eine Dualdarstellung des Abtastwertes, so kann in der Vorverarbeitungseinheit diese Darstellung zwischengespeichert und die Differenzbildung in bekannter Weise in dieser Darstellung vorgenommen werden. Es ist jedoch auch möglich, die Differenzbildung aus der codierten Form der Abtastwerte, wie sie bereits im Speicher steht, vorzunehmen. Ist der Schwellwert z.B. ±1, so ist bei einem Codeaufbau gemäß Tabelle 1 die notwendige und hinreichende Bedingung, daß sich zwei Abtastwerte genau um eine Quantisierungsstufe unterscheiden, die, daß sich die zugehörigen Codewörter nur in einer Binärstelle unterscheiden, und falls dies nicht die letzte Stelle ist, der (niedrigwertigere) Codewortrest $LO^i$ (i = 0, 1, 2, 3,...) lautet (d.h.L, L0, L00, L000,...). Der größere Abtastwert wird dabei durch das Codewort gegeben, dessen Anfangsteil bis einschließlich der sich unterscheidenden Stelle eine ungerade Anzahl von Einsen aufweist.

Die beschriebene Glättung ist vor allem für die wirksame Codierung von Bereichen konstanter Abtastwerte wichtig, die ohne Ausschaltung irrelevanter Schwankungen nicht rationell wäre. Natürlich sind auch weitergehende Formen der Vorverarbeitung möglich. Der erforderliche Grad dafür hängt dabei sehr stark von den jeweiligen Anforderungen an die Kopie und die dafür notwendigen Quantisierungsstufen und besonders auch von der Qualität der Vorlage ab. In vielen Fällen wird schon das Weglassen der niedrigstwertigen Stelle(n) genügen, was ein Zusammenfassen von zwei oder mehreren Quantisierungsstufen zu größeren Einheiten bedeutet. Ein solches Vorgehen hat zwar den Vorteil der besonderen Einfachheit, es versagt gegenüber den oben beschriebenen Maßnahmen jedoch in den Fällen, in denen kleine Schwankungen um einen konstanten Abtastwert auftreten, welche gerade im Grenzbereich zweier gröberer Quantisierungsstufen liegen.

Zuweilen ist es auch wünschenswert, den Wert eines konstanten Abtastwerts genauer anzugeben, als es der sonst übertragenen Quantifizierungsgenauigkeit entspricht. Ein solcher Quasi-Zwischenwert kann dadurch simuliert werden, daß der sonst konstante Bereich durch die zwei benachbarten quantisierten Abtastwerte in räumlich statistischer Mischung wiedergegeben wird. Für die Übertragung wird dann nur der kleinere Abtastwert und das Mischungsverhältnis, z.B. durch Angabe der Bildpunkte, für die dieser kleinere Wert gelten soll, und Angabe der Bildpunkte, für die der um eine Quantisierungsstufe größere Abtastwert gelten soll, angegeben, wobei die letzteren Größen natürlich durch eine besondere Kennung kenntlich zu machen sind. Auf der Empfängerseite wird dann aufgrund dieser Informationen eine statistische Mischung

5

der beiden Grauwerte vorgenommen, so daß damit ein Pseudo-Zwischenwert entsteht.

In einer besonderen Ausführungsform des Verfahrens wird für das Erfassen kleinerer Schwankungen eine zusätzliche Matrixzeile pro Bildzeile beziehungsweise Bildkomponentenzeile verwendet. In den regulären Matrixzeilen erfolgt die Abspeicherung der Abtastwerte wie bisher beschrieben. Solange jedoch der abgetastete Wert eines Bildpunktes um nicht mehr als eine Einheit gegenüber dem regulär abgespeicherten Wert des vorangegangenen Bildpunktes ansteigt, wird diese Schwankung nur in der Zusatzzeile notiert und bleibt der abgespeicherte Wert in den regulären Matrixzeilen unverändert. Damit werden in diesen Zeilen die Lauflängen durch diese Schwankungen nicht verkürzt und bleibt eine effektivere Datenkompression erhalten. Übertragen werden entweder nur die Lauflängen der regulären Matrixzeilen oder je nach den jeweiligen Anforderungen zusätzlich von der Zusatzzeile die Summe aller Einswerte und Summe aller Nullwerte (statistisches Mischungsverhältnis) oder in codierter, vorzugsweise jedoch in uncodierter Form auch die gesamte Zusatzzeile. Durch Verwendung mehrerer solcher Zusatzzeilen lassen sich ganz entsprechend auch Abtastwertschwankungen, die über eine Einheit hinausgehen, auf diese Weise abfangen.

Bei den bisher beschriebenen Maßnahmen der Vorverarbeitung wurden zur Glättung nur die Abtastwerte der angrenzenden Bildpunkte innerhalb der gleichen Bildzeile benutzt. Es können dafür aber auch zusätzlich die Abtastwerte der angrenzenden Bildzeilen herangezogen werden. Es ist dann notwendig, alle Werte der betreffenden Bildzeilen in entsprechenden Speicherbereichen aufzubewahren. Werden diese Speicherbereiche als Speicherebenen betrachtet, die übereinander gelegt werden, so kommen die Werte benachbarter Bildpunkte auch in dem Speicher benachbart zu liegen. Die Entscheidung über Relevanz oder Irrelevanz auftretender Abtastwertänderungen kann durch Einbeziehen dieser Nachbarwerte noch qualifizierter erfolgen.

Schließlich ermöglicht die Berücksichtigung benachbarter Bildzeilen es auch, aus dem Feld der quantisierten Abtastwerte ein neues Wertefeld zu erzeugen, indem die Abtastwerte der Folgezeilen mit denjenigen der vorangegangenen Zeile verglichen und nur noch die nicht erwarteten Änderungen der Folgezeilen gemäß den bekannten Grundsätzen der zweidimensionalen Lauflängen-Codierung codiert werden. Durch diese Weitergehende Vorverarbeitung wird ein reduziertes wertefeld erhalten, auf das das beschriebene Verfahren ebenfalls anwendbar ist und zu einer besonders komprimierten Darstellung des abgetasteten Bildes führt.

Ein Blockschaltbild einer Anordnung zur Realisierung des beschriebenen Verfahrens ist in Fig. 3 dargestellt. Das abzutastende Bild befindet sich auf einem blattförmigen Träger 2, der hier auf einer rotierenden Trommel aufgespannt ist. Über eine optische Abtastanordnung 4 wird der Träger 2 dadurch in aufeinanderfolgenden Bildzeilen bildpunktweise abgetastet, und die analogen Abtastwerte werden einem Quantisierer 6 zugeführt, der die digitalisierten und in einem hierarchischen Binärcode entsprechend der Tabelle 1 dargestellten Abtastwerte einer Vorverarbeitungseinheit 8 zuführt. Diese führt wenigstens einige der vorher beschriebenen Vorverarbeitungsschritte durch, und die dabei entstehenden Binärwörter werden dem Speicher 10 zugeführt und darin vorzugsweise an aufeinanderfolgenden Speicherplätzen wortparallel eingeschrieben. Der Inhalt des Speichers 10 hat nach der Abtastung einer Bildzeile etwa die in Fig. 1b bzw. 1c dargestellte Form, wobei jede Spalte der dort dargestellten Matrix die Bits eines Binärwortes angibt.

Nach der Abtastung einer vollständigen Bildzeile wird der Speicher 10 zeilenweise ausgelesen, beispielsweise indem aufeinanderfolgend alle Binärwörter wiederholt ausgelesen werden und durch einen Umschalter 12 der Inhalt jeweils einer anderen Binärstelle aller Binärwörter einem Lauflängen-Codierer 14 zugeführt wird. Die zeilenweisen Lauflängen, wie sie z.B. in Fig. 1d angedeutet sind, werden über eine übliche Modulationseinrichtung 16 über die Übertragungsstrecke 18, die auch einen Speicher enthalten kann, einem Empfänger zugeführt. Um eine kontinuierliche Abtastung und Übertragung zu ermöglichen, ist es sinnvoll, den Speicher so auszulegen, daß er gleichzeitig die Daten von mehr als einer Bildzeile aufnehmen kann, um das Einschreiben und Auslesen aus dem Speicher 10 zu entkoppeln. Wenn eine zweidimensionale Codierung verwendet werden soll, müssen entsprechend mehrere Bildzeilen gleichzeitig gespeichert sein. Der Speicher 10 kann dann als aus mehreren Ebenen aufgebaut betrachtet werden, wobei jede Ebene die Abtastwerte einer Bildzeile in der in Fig. 1b bzw. 1c dargestellten Form enthält. Darüber hinaus kann es zur Entkopplung von Lauflängen-Codierung und Übertragung zweckmäßig sein, nach dem Codierer 12 die codierten Daten in einem nicht dargestellten Pufferspeicher noch einmal in linearer Form zwischenzuspeichern.

Nach einer Abwandlung der in Fig. 3 dargestellten Anordnung kann auch die Lauflängen-Codierung für die einzelnen Binärstellen der Binärwörter parallel erfolgen und dann erst die Speicherung für die folgende Parallel-Serien-Umsetzung vorgenommen werden. Hierfür ist bei der in Fig. 3 dargestellten Anordnung die Reihenfolge von Codierer 14, der dann also eine Anzahl getrennter Lauflängen-Codierer enthält, und Speicher 10 zu vertauschen.

Auf der Empfängerseite werden die übertragenen Daten in einem Demodulator 26 in die codierten Lauflängen zurückgewandelt und einem Decodierer 24 zugeführt, der diese über einen Umschalter 22, der zum Umschalter 12 auf der Senderseite synchron läuft, nacheinander den einzelnen Binärstellen in einem Empfangsspeicher 20 zugeführt, der also zeilenweise gefüllt wird, bis nach Übertragung der codierten Lauflängen der letzten Binärstelle einer Bildzeile ein Inhalt im Speicher 20 entstanden ist, der der in Fig. 1b bzw. 1c dargestellten Form entspricht. Danach werden dem Speicher 20 die aufeinanderfolgenden Binärwörter wortweise entnommen und einem Digital/Analog-Wandler 36 zugeführt, der eine Schreibanordnung 34 steuert. Diese zeichnet bildzeilenweise auf einem Aufzeichnungsträger 32, der sich auf einer rotierenden Trommel befindet, die mit der senderseitigen Trommel synchron läuft, ein Bild entsprechend dem auf der Senderseite abgetasteten Bild.

Wenn der Empfänger nicht die gleiche Anzahl von Graustufen oder Farbkomponenten wiedergeben kann wie der Sender abtastet, werden die entsprechenden, zweckmäßigerweise zuletzt übertragenen Lauflängen nicht mehr in den Empfangsspeicher 20 eingeschrieben, oder beim Verbindungsaufbau wird vom Empfänger zum Sender signalisiert, welche Bitstellen verarbeitet werden können, und der Sender stoppt den Umschalter 12 an der entsprechenden Binärstelle und codiert die folgenden Binärstellen nicht mehr, so daß die Codierung und insbesondere die Übertragung der Lauflängen-Codewörter aufeinanderfolgender Bildzeilen beschleunigt wird.

**Ansprüche**

1. Verfahren zum Übertragen von Bildern, die in aufeinanderfolgenden Bildzeilen bildpunktweise abgetastet werden, wobei die Abtastwerte quantisiert und als Binärwörter dargestellt und diese mittels eines Lauflängen-Codes in Codewörter umgesetzt werden,
dadurch gekennzeichnet, daß zur Übertragung von Bildern, deren Abtastwerte als Binärwörter mit mehreren Binärstellen dargestellt werden, die Bitwerte jeweils gleichwertiger Binärstellen einer Gruppe von Abtastwerten getrennt mittels eines Lauflängen-Codes umgesetzt und übertragen werden, so daß für jede Gruppe eine der Stellenanzahl der Binärwörter gleiche Anzahl codierter Lauflängenfolgen entsteht, die decodiert die Binärstellen der Binärwörter aller Abtastwerte einer Gruppe ergeben.

2. Verfahren nach Anspruch 1,
dadurch gekennzeichnet, daß die Abtastwerte als Binärwörter eines mindestens teilweise hierarchischen Binärcodes dargestellt werden, bei dem das höchstwertige Bit angibt, ob der Abtastwert im oberen oder im unteren Bereich der Werteskala liegt.

3. Verfahren nach Anspruch 2,
dadurch gekennzeichnet, daß als hierarchischer Binärcode ein Code gewählt wird, der sich in benachbarten Wertstufen jeweils nur in einer Binärstelle unterscheidet.

4. Verfahren nach einem der Ansprüche 1 bis 3,
dadurch gekennzeichnet, daß für die Codierung wenigstens einiger Binärstellen verschiedene Lauflängen-Codes verwendet werden.

5. Verfahren nach Anspruch 4,
dadurch gekennzeichnet, daß zur Codierung der verschiedenen Binärstellen eine Klasse von Lauflängen-Codes verwendet wird, deren Parameter in Abhängigkeit von der codierten Binärstelle verändert werden.

6. Verfahren nach einem der Ansprüche 1 bis 5,
dadurch gekennzeichnet, daß nach der Lauflängen-Codierung jeder Binärstelle einer Gruppe ein Gruppeendezeichen eingefügt wird.

7. Verfahren nach einem der Ansprüche 1 bis 6,
dadurch gekennzeichnet, daß wenigstens am Ende jeder Gruppe Kennungs-Bits eingefügt werden.

8. Verfahren nach Anspruch 7,
dadurch gekennzeichnet, daß nach der Lauflängencodierung jeder Binärstelle einer Gruppe Kennungs-Bits eingefügt werden.

9. Verfahren nach Anspruch 7 oder 8,
dadurch gekennzeichnet, daß die Kennungs-Bits Information über wenigstens die durch zyklische Zählung abgekürzte Nummer der zugehörigen Gruppe enthalten.

10. Verfahren nach Anspruch 8,
dadurch gekennzeichnet, daß die Anzahl der Kennungs-Bits unterschiedlich ist und von der codierten Binärstelle und/oder vom Inhalt eines Teils der Kennungs-Bits abhängt.

11. Verfahren nach Anspruch 8,
dadurch gekennzeichnet, daß die Kennungs-Bits Information über die Lage der zugehörigen Binärstelle im Binärwert enthalten.

12. Verfahren nach Anspruch 8,
dadurch gekennzeichnet, daß die Kennungs-Bits Information über den für die codierte Binärstelle angewendeten Lauflängen-Code enthalten.

13. Verfahren nach einem der Ansprüche 1 bis 12,
dadurch gekennzeichnet, daß zur Übertragung von Farbbildern für jede Farbkomponente der Abtastwerte getrennt eine Quantisierung und Lauflängen-Codierung der einzelnen Binärstellen der Binärwörter vorgenommen wird.

14. Verfahren nach einem der Ansprüche 1 bis 12,
dadurch gekennzeichnet,daß zur Übertragung von Farbbildern für den Luminanzwert und die Chrominanzwerte als getrennte Komponenten der Abtastwerte eine Quantisierung und Lauflängen-Codierung der einzelnen Binärstellen der Binärwörter vorgenommen wird.

15. Verfahren nach Anspruch 14,
dadurch gekennzeichnet, daß zur Übertragung der Chrominanzwerte diese mit einer geringeren Anzahl Quantisierungsstufen und/oder mit einer geringeren räumlichen Auflösung, insbesondere durch Zusammenfassen der Chrominanzwerte mehrerer benachbarter Abtastwerte, codiert werden.

16. Verfahren nach einem der Ansprüche 13 bis 15,
dadurch gekennzeichnet, daß nach der Lauflängencodierung wenigstens einer Binärstelle der Binärwörter jeder Komponente Kennungsbits mit Information über die Komponente eingefügt werden.

17. Verfahren nach einem der vorhergehenden Ansprüche,
dadurch gekennzeichnet, daß mittels einer Vorverarbeitung der Abtastwerte irrelevante räumliche Schwankungen der Abtastwerte in Bereichen an sich konstanter Abtastwerte ausgeglichen werden.

18. Verfahren nach Anspruch 17,
dadurch gekennzeichnet, daß bereits bei der Abtastung außer den Helligkeitswerten des abgetasteten Bildpunktes auch diejenigen seiner unmittelbaren Umgebung mit erfaßt werden.

19. Verfahren nach Anspruch 17 oder 18,
dadurch gekennzeichnet, daß die Abtastwerte aufeinanderfolgender Bildpunkte miteinander verglichen und durch einen konstanten Wert wiedergegeben werden, solange die Unterschiede unter einem vorgegebenen Schwellwert bleiben.

20. Verfahren nach Anspruch 19,
dadurch gekennzeichnet, daß außer dem konstanten Wert eine die Anzahl der Bildpunkte mit diesem konstanten Wert und die Anzahl der Bildpunkte mit dem um den Schwellwert unterschiedlichen Abtastwert angebende Information bestimmt und übertragen wird, und daß auf der Empfangsseite aus dieser zusammengesetzten Information eine im wesentlichen statistische räumliche Mischung der beiden Abtastwerte zur Wiedergabe als Pseudo-Zwischenwert erzeugt wird.

21. Verfahren nach Anspruch 19,
dadurch gekennzeichnet, daß die Binärwörter je um wenigstens ein zusätzliches Bit verlängert werden, das die Abweichung des Abtastwertes von dem durch das jeweilige Binärwort dargestellten konstanten Wert angibt, wobei die zusätzlichen Bits der Binärwörter einer Gruppe vorzugsweise zusammenliegend uncodiert übertragen werden.

22. Verfahren nach einem der Ansprüche 17 bis 21,
dadurch gekennzeichnet, daß zur Entscheidung über Relevanz und Irrelevanz auftretender Schwankungen auch die Abtastwerte benachbarter Bildzeilen herangezogen werden.

23. Verfahren nach einem der vorhergehenden Ansprüche,
dadurch gekennzeichnet, daß die in die Binärwörter umgesetzten Abtastwerte für die gleichwertigen Binärstellen aufeinanderfolgender Bildzeilen durch einen zweidimensionalen Lauflängen-Code codiert werden.

24. Verfahren nach einem der vorhergehenden Ansprüche,
dadurch gekennzeichnet, daß die Codierung und Übertragung an wenigstens einen Empfänger von der Senderseite aus unabhängig von den Wiedergabemöglichkeiten des Empfängers erfolgt und daß in jedem Empfänger entsprechend seinem Aufbau nur ein Teil der empfangenen Information decodiert wird zur vereinfachten Wiedergabe des abgetasteten Bildes.

25. Verfahren nach einem der vorhergehenden Ansprüche,
dadurch gekennzeichnet, daß die Codierung und/oder Übertragung bezüglich Anzahl der Binärstufen und Farbkomponenten in Abhängigkeit vom Aufbau des Empfängers erfolgt.

26. Anordnung zur Durchführung des Verfahrens nach einem der Ansprüche 1 bis 25, mit einem senderseitigen Kodierer zum Umsetzen der Anzahl Bits gleichen Werts in Binärwörtern aufeinanderfolgender Abtastwerte in Codewörter gemäß einem Lauflängen-Code zum bitseriellen Übertragen der Codewörter zum Empfänger und einem empfängerseitigen Decodierer zum Decodieren der empfangenen Codewörter und zum Erzeugen von Binärwörtern entsprechend einem wiederzugebenden Bild,
dadurch gekennzeichnet, daß senderseitig ein Senderspeicher (10) zur aufeinanderfolgenden Aufnahme der aus den Abtastwerten erzeugten Binärwörter wenigstens einer Gruppe von Abtastwerten, eine Sender-Steueranordnung (12) zum aufeinanderfolgenden Auslesen wenigstens einer Binärstelle aller Binärwörter einer Gruppe und zum Zuführen der Bitwerte der Binärstellen zum Codierer (14) vorgesehen ist und daß empfangsseitig ein Empfangsspeicher (20) und eine Empfänger-Steueranordnung (22) vorgesehen sind, wobei die Empfänger-Steueranordnung die vom Decodierer (24) gelieferten Bitfolgen in den Empfangsspeicher (20) an den entsprechenden Bitstellen des Empfangsspeichers (20) einschreibt und nach Empfang aller übertragener Information einer Gruppe nacheinander die jeweils zu einem Binärwort gehörenden Bitstellen ausliest.

27. Anordnung zur Durchführung des Verfahrens nach einem der Ansprüche 1 bis 25, mit einem senderseitigen Codierer zum Umsetzen der Anzahl Bits gleichen Werts in Binärwörtern aufeinanderfolgender Abtastwerte in Codewörter gemäß einem Lauflängen-Code zum bitseriellen Übertragen der Codewörter zum Empfänger und einem empfängerseitigen Decodierer zum Decodieren der empfangenen Codewörter und zum Erzeugen von Binärwörtern entsprechend einem wiederzugebenden Bild,
dadurch gekennzeichnet, daß senderseitig der Codierer (14) die aus den Abtastwerten erzeugten Binärwörter je Binärstelle parallel in je eine Folge von Codewörtern umsetzt und in einem Sendespeicher (10) einschreibt, daß eine Sender-Steueranordnung (12) vorgesehen ist, die aus dem Senderspeicher (10) nacheinander jeweils eine Folge von Codewörtern einer Gruppe von Abtastwerten ausliest und zum Empfänger überträgt, und daß empfangsseitig ein Empfangsspeicher (20) und eine Empfänger-Steuerung (22) vorgesehen sind, wobei die Empfänger-Steuerung (20) die empfangenen Folgen von Codewörtern einer Gruppe nacheinander im Empfangsspeicher (20) speichert und parallel ausliest und dem Decodierer (24) zuführt, der die Bitwerte der einzelnen Bitstellen der Binärwörter einer Bildzeile parallel erzeugt.

28. Anordnung nach Anspruch 26 oder 27,
dadurch gekennzeichnet, daß der Speicher mehrere Ebenen zur Aufnahme und entkoppelten Eingabe und Ausgabe der Daten enthält.

a.)

b.)
```
0 1 1 1 0 0 0 0 0 0 0 0 0 1 0 0 0 1 1 1 1 1 1 1 1 1 0 1 1 0
1 0 1 1 1 0 0 0 0 0 0 1 1 0 1 1 1 0 1 1 1 1 1 1 0 0 1 1 0 1
1 1 0 0 0 1 0 0 0 0 1 0 1 0 1 1 0 0 0 1 1 1 1 0 1 0 1 0 1 0
0 1 1 0 1 1 1 1 1 0 0 0 0 0 1 0 1 1 1 0 1 1 0 0 0 0 0 1 0 0
```

c.)
```
O L L L O O O O O O O O O L O O O L L L L L L L L L O L L O
L L O O L O O O O O O L L L L L L L O O O O O O L L L O L L
O L L L L L O O O O L L O O O O L O L O O O O L L O O L L L
L O L O L O L L L O L O L O O L L L L L L O O L O L O L L L O
```

d.)
```
1       3                 9 1       3                   9 1     2 1
   2   2 1               6             7             6       3 1     2
1           5         4     2       4 1 1 1       4     2   2         3
1 1 1 1 1 1       3 1 1 1 1     2         5     2 1 1 1 1         3 1
```

# Fig.1

1-II-PHD 88-139

Fig.2

Fig. 3

2-II-PHD 88-139